# EUROPEAN PATENT SPECIFICATION

(11) **EP 3 236 186 B1**
(45) Date of publication and mention of the grant of the patent: **28.09.2022**
(21) Application number: 15865034.1
(22) Date of filing: 28.12.2015
(51) Int. Cl.: F28D 15/02, G01N 25/20, B64G 1/50, B64G 7/00, G01M 3/00, F28D 21/00

(54) **DEVICE AND METHOD FOR TESTING COMPATIBILITY OF GRAVITY-DRIVEN TWO-PHASE FLUID LOOP**
VORRICHTUNG UND VERFAHREN ZUM TESTEN DER KOMPATIBILITÄT EINES SCHWERKRAFTGESTEUERTEN ZWEIPHASENFLÜSSIGKEITSKREISES
DISPOSITIF ET PROCÉDÉ POUR ESSAYER LA COMPATIBILITÉ D'UNE BOUCLE DE FLUIDE À DEUX PHASES MÛ PAR GRAVITÉ

(30) Priority: 02.12.2014 CN 201410720990; 02.12.2014 CN 201410720845
(43) Date of publication of application: 25.10.2017
(73) Proprietor: Beijing Institute of Spacecraft System Engineering, Beijing 100094 (CN); Miao, Jianyin, Beijing 100094 (CN); Wang, Lu, Beijing 100094 (CN); Zhang, Hongxing, Beijing 100094 (CN); Lv, Wei, Beijing 100094 (CN); He, Jiang, Beijing 100094 (CN); Li, Lei, Beijing 100094 (CN)
(72) Inventor: MIAO, Jianyin, Beijing 100094 (CN); WANG, Lu, Beijing 100094 (CN); ZHANG, Hongxing, Beijing 100094 (CN); LV, Wei, Beijing 100094 (CN); HE, Jiang, Beijing 100094 (CN); LI, Lei, Beijing 100094 (CN)
(74) Representative: Vidon Brevets & Stratégie
(86) International application number: PCT/CN2015/000833
(87) International publication number: WO 2016/086503

(56) References cited:
- WO-A1-01/63195
- WO-A1-01/63195
- CN-A- 101 315 257
- CN-A- 102 012 182
- CN-A- 102 042 775
- CN-A- 102 155 859
- CN-A- 103 017 413
- CN-A- 104 482 789
- CN-A- 104 535 606
- CN-U- 201 983 669
- CN-U- 203 068 877
- CN-U- 203 561 254
- CN-Y- 2 643 262
- JP-A- H05 283 571
- JP-A- 2002 303 494
- JP-A- 2006 250 457
- US-A- 4 258 780
- US-A- 4 258 780
- US-A1- 2011 214 840

## Description

### FIELD OF THE INVENTION

The present invention relates to the field of spacecraft thermal control technologies, and specifically, to a test device and method for compatibility of a gravity-driven two-phase fluid loop.

### BACKGROUND OF THE INVENTION

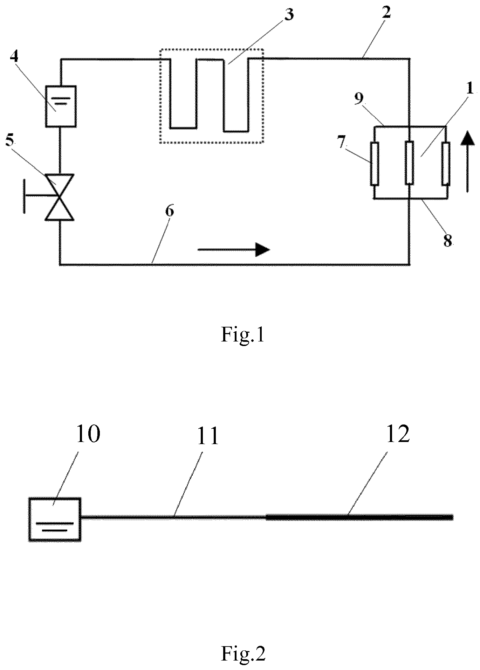

In landing probing activities of the moon (or a planet), there is no electric energy for a probe during a moon night period due to a large temperature difference between day and night on the surface of the moon. To resolve the difficult problem of living of the probe at moon night, a thermal control design solution of an isotopic nuclear heat source and a gravity-driven two-phase fluid loop is used. The gravity-driven two-phase fluid loop system comprises, as shown in FIG. 1, an evaporator 1 (including a screen mesh evaporator 7, a liquid distributor 8, and a steam convergence device 9), a steam pipeline 2, a condenser pipeline 3, a liquid storage device 4, a liquid pipeline 6, and a control valve 5; wherein the condenser pipeline 3 is located above a gravity field of the liquid storage device 4; the evaporator 1 is located below the gravity field of the liquid storage device 4, and is coupled to an isotopic heat source; a gravity auxiliary height difference is formed between an inner liquid level of the liquid storage device 4 and a bottom part of the evaporator 1; the liquid storage device 4 is connected to an inlet of the evaporator 1 by using the liquid pipeline 6; a control valve 5 is disposed on the liquid pipeline 6; an outlet of the evaporator 1 is connected to the liquid storage device 4 via the steam pipeline 2 and the condenser pipeline 3 successively, to form a sealed pipeline system. Ammonia is filled in the gravity-driven two-phase fluid loop as a working medium for transferring heat during gas liquid phase transition. At moon night, the control valve 5 is opened, and the ammonia working medium in the evaporator 1 absorbs heat of an isotopic heat source and performs phase change to get gas; the gaseous ammonia working medium flows into a condenser in the condenser pipeline 3 along the steam pipeline 2; after transferring heat to a moon surface probe device through the condenser pipeline 3, the gaseous ammonia working medium is condensed into liquid and flow into the liquid storage device 4; under the effect of gravity, the liquid ammonia working medium flows into the evaporator along the liquid pipeline 6 through the control valve 5 to form a heat conductive loop, so as to perform heat preservation on a celestial probe. In a moon day, the gravity-driven two-phase fluid loop is closed by closing the control valve 5, to prevent heat of the isotopic nuclear heat source from being transferred into the probe; the heat of the isotopic nuclear heat source dissipates outwards by means of heat radiation of itself; the temperature of the isotopic nuclear heat source is up to 250°C to 260°C, so that the temperature of the evaporator 1 is up to 250°C to 260°C. The working medium of the gravity-driven two-phase fluid loop is ammonia, and the material of the loop is 022Cr l7Ni 12Mo2 stainless steel, and the content of the nickel element is 10% to 14%. Under the condition that the nickel element is used as a catalyst, and the temperature is up to 250°C to 260°C, ammonia generates non-condensable gases that are insoluble in liquid ammonia such as nitrogen and hydrogen. With the operation of the two-phase fluid loop, non-condensable gases (nitrogen and hydrogen) gradually concentrate in the liquid storage device, forming partial pressure of the non-condensable gases, resulting in increase of system pressure and increase of phase change temperature of the evaporator. Therefore, the temperature of the isotopic nuclear heat source increases; in the moon night period, the heat source, which radiates outwards, of the isotopic nuclear heat source, increases. Because the amount of generated heat is unchanged, heat transferred into the probe by using the gravity-driven two-phase fluid loop is reduced, and the performance of the gravity-driven two-phase fluid loop is adversely affected. Therefore, the problem of compatibility between the ammonia working medium and the material of the loop needs to be researched, and the amount of non-condensable gases generated by decomposition of ammonia needs to be estimated. If the problem of compatibility is researched by directly using the gravity-driven two-phase fluid loop, there are the difficult problems that the high-temperature obtaining of the evaporator 1 is difficult and the amount of the non-condensable gases generated by decomposition cannot be directly tested, and therefore a test device is needed to perform effective judgment on compatibility of the fluid loop. A heat pipe with a loop type structure is generally known from document CN 201 983 669 U. This heat pipe may be formed integrally and may be made of stainless steel.

### SUMMARY OF THE INVENTION

In view of above, the present invention provides a device for testing compatibility of a gravity-driven two-phase fluid loop, which can perform equivalent simulation on a decomposition process of an ammonia working medium of the gravity-driven two-phase fluid loop under the condition of high temperature and application of nickel as a catalyst.

The device for testing compatibility of a gravity-driven two-phase fluid loop of the present invention is a sealed and hollow gravity heat pipe according to claim 1, that is integrally formed; the test device is divided into three sections: a liquid storage component, a connection pipeline, and a high-temperature baking component; wherein one end of the connection pipeline is connected to the liquid storage component, and the other end is connected to the high-temperature baking component; the device for testing is prepared from the same material as that of the gravity-driven two-phase fluid loop, and the test device is filled with the same working medium as that of the gravity-driven two-phase fluid loop; wherein
a pipeline volume of the high-temperature baking component is not less than that of an evaporator of the gravity-driven two-phase fluid loop; an inner surface area of the pipeline of the high-temperature baking component is not less than that of the evaporator; a dimension of a screen mesh filled in the high-temperature baking component is the same as that of a screen mesh in the evaporator;
a cross section of the connection pipeline is not less than a maximum value of cross sections of a steam pipeline, a condenser pipeline, and a liquid pipeline of the gravity-driven two-phase fluid loop; a length of the connection pipeline is not greater than a sum of lengths of the steam pipeline and the condenser pipeline of the gravity-driven two-phase fluid loop;
a sum of a gas space volume of the liquid storage component and a volume of the connection pipeline is not less than a sum of capacities of the steam pipeline, the condenser pipeline, and the liquid pipeline of the gravity-driven two-phase fluid loop and a gas space volume of a liquid storage device.

A filling amount of ammonia working medium in the test device ensures that the sum of the gas space volume of the liquid storage component and the volume of the connection pipeline is not less than the sum of the capacities of the steam pipeline, the condenser pipeline, and the liquid pipeline of the gravity-driven two-phase fluid loop and the gas space volume of the liquid storage device; meanwhile, the filling amount of the ammonia working medium ensures normal work of the gravity heat pipe.

During a high-temperature baking process, if the test device is horizontally placed, a section, connected to the liquid storage component, of the connection pipeline in the test device is bent to ensure that a height of the liquid storage component is lower than that of the high-temperature baking component.

The present invention further provides a method for testing compatibility of a gravity-driven two-phase fluid loop by using the foregoing test device, according to claim 4, so as to effectively determine the compatibility of the gravity-driven two-phase fluid loop.

The method for testing compatibility includes the following steps:
step 1, simulating decomposition of ammonia working medium of the gravity-driven two-phase fluid loop in a moon day by using the test device; bending a section, connected to the liquid storage component, of the connection pipeline in the test device, so that a height of the liquid storage component is lower than that of the high-temperature baking component;
step 2, placing the section of the high-temperature baking component of the test device in a high-temperature baking oven, to make a temperature thereof maintained in a range of from 250°C to 260°C;
step 3, heating and controlling a temperature of the connection pipeline of the test device, to make the temperature thereof higher than a maximum temperature of temperatures of the steam pipeline, the condenser pipeline, and the liquid pipeline in the gravity-driven two-phase fluid loop;
step 4, controlling a temperature of the liquid storage component of the test device, to make the temperature thereof experience the same change as that of the liquid storage device during a moon day of the gravity-driven two-phase fluid loop;
step 5, maintaining temperature control of the liquid storage component, the connection pipeline, and the high-temperature baking component for 14 earth days;
step 6, performing, by the test device, a test of an amount of non-condensable gases according to a method for testing non-condensable gases by the gravity heat pipe, to obtain the amount of non-condensable gases generated by decomposition of the ammonia working medium during the moon day;
step 7, filling highly-pure nitrogen with a same substance amount into the gravity-driven two-phase fluid loop according to the amount of the non-condensable gases obtained in step 6; and performing a heat transfer property test on the gravity-driven two-phase fluid loop, comparing a temperature increment of the evaporator after the non-condensable gases are filled with an allowed temperature increment of the evaporator, and determining whether the ammonia working medium is compatible with the material of the gravity-driven two-phase fluid loop during the moon day; if the temperature increment of the evaporator after the non-condensable gases are filled is less than the allowed temperature increment of the evaporator, the ammonia working medium is compatible with the material of the gravity-driven two-phase fluid loop; and otherwise, the ammonia working medium is incompatible with the material of the gravity-driven two-phase fluid loop.

Beneficial effects:
(1) The test device of the present invention has a simple structure, and can perform equivalent simulation on a decomposition process of the ammonia working medium in the gravity-driven two-phase fluid loop under the condition of high temperature and application of nickel as a catalyst, so as to obtain, by using a method of measuring the non-condensable gases with a gravity heat pipe, the amount of non-condensable gases obtained by decomposition of ammonia; the test method is ready and easy, so that the compatibility between the ammonia working medium and the material of the gravity-driven two-phase fluid loop can be easily and effectively determined.
(2) The high-temperature baking component is used to simulate the evaporator, and the high-temperature baking component is placed in a high-temperature baking oven to simulate a high-temperature condition of the evaporator in a moon day, and the implementation method is easy and effective.
(3) If the test device is horizontally placed in a high-temperature baking process, a section, close to the liquid storage device, of the connection pipeline in the test device needs to be slightly bent, so that the liquid storage component is slightly lower than the high-temperature baking component, thereby preventing the liquid ammonia working medium in the liquid storage component from flowing into the high-temperature baking component under the effect of gravity, and therefore equivalent simulation of the test device is prevented from being destroyed.
(4) In the present invention, a test device is used to simulate the decomposition process of the ammonia working medium of the gravity-driven two-phase fluid loop in a moon day, and the amount of non-condensable gases, which are generated by the ammonia working medium in a moon day can be measured by using the method for testing non-condensable gases by directly using the gravity heat pipe, so as to conveniently determine the compatibility of the gravity-driven two-phase fluid loop. In addition, a manner of forming non-condensable gases by a mixture of nitrogen and hydrogen is replaced with a manner of filling highly-pure nitrogen into the gravity-driven two-phase fluid loop. The filling manner is easy and practical and can avoid errors caused by filling two gases.

### BRIEF DESCRIPTION OF THE FIGURES

FIG. 1 is a schematic diagram showing composition of a gravity-driven two-phase fluid loop system.
FIG. 2 is a schematic diagram showing composition of a device for testing compatibility.

Wherein, 1-evaporator, 2-steam pipeline, 3-condenser pipeline, 4-liquid storage device, 5-control valve, 6-liquid pipeline, 7-screen mesh evaporator, 8-liquid distributor, 9-steam convergence device, 10-liquid storage component, 11-connection pipeline, 12-high-temperature baking component.

### DETAILED DESCRIPTION

The present invention is described in detail below with reference to the accompanying drawings and embodiments.

The present invention provides a device for testing compatibility of a gravity-driven two-phase fluid loop. The test device is a gravity heat pipe. Decomposition of ammonia in a high-temperature baking process of the gravity heat pipe is used to perform equivalent simulation on a decomposition process of ammonia of an evaporator of the gravity-driven two-phase fluid loop in a moon day, so as to measure non-condensable gases according to a method for testing non-condensable gases of the existing gravity heat pipe.

The schematic diagram of the gravity-driven two-phase fluid loop is shown in FIG. 1. In a moon day, the control valve 5 is closed, and the temperature of the evaporator 1 (including a screen mesh evaporator 7, a liquid distributor 8, and a steam convergence device 9) matching the isotopic nuclear heat source 44 is up to 250°C and 260°C; the ammonia working medium in the evaporator is gaseous; the temperature of the liquid storage device 4 is in a range of from 0°C to 70°C; the temperatures of the steam pipeline 2, the condenser pipeline 3, and the liquid pipeline 6 are higher than those of the liquid storage device 4; therefore, the working medium in the steam pipeline 2, and the condenser pipeline 3 are gaseous, and the liquid storage device 4 is divided into two layers; the upper layer is filled with gaseous ammonia and the lower layer is filled with liquid ammonia. The working medium ammonia in the evaporator 1 performs decomposition under the condition that nickel is used as a catalyst to generate nitrogen and hydrogen; with elapse of time, the concentration of the nitrogen and hydrogen in the evaporator 1 is increasing; however, the concentration of gaseous ammonia gradually decreases; in an initial state, highly-pure ammonia exist in the steam pipeline 2, the condenser pipeline 3, the liquid storage device 4, and the liquid pipeline 5; driven by a concentration difference, nitrogen and ammonia in the evaporator 1 diffuse into the steam pipeline 2, the condenser pipeline 3, the liquid storage device 4, and the liquid pipeline 6. The concentration of nitrogen and hydrogen in the evaporator 1 decreases, but the highly-pure ammonia in the steam pipeline 2, condenser pipeline 3, liquid storage device 4, and liquid pipeline 6 diffuse into the evaporator 1, and the concentration of gaseous ammonia in the evaporator 1 increases. Due to the diffusion effect, on the one hand, the amount of nitrogen and ammonia in the evaporator 1 is reduced, and on the other hand, the amount of ammonia in the evaporator 1 is increased, so that the ammonia in the evaporator 1 continuously decomposes until the decomposition reaction in the entire system reaches chemical balance. Because the ammonia working medium and non-condensable gases move depending on the diffusion effect and a height difference between the liquid storage device 4 and the evaporator 1 is not used as an affecting factor, the gravity heat pipe may be horizontally placed, and the high-temperature baking component is placed in the high-temperature baking oven for heating to simulate the high temperature of the evaporator.

The test device is a sealed and hollow gravity heat pipe that is integrally formed, and is filled with working medium therein; the test device of the present invention is divided into three sections: a liquid storage component 10, a connection pipeline 11, and a high-temperature baking component 12; one end of the connection pipeline 11 is connected to the liquid storage component 10; the other end is connected to the high-temperature baking component 12; the high-temperature baking component 12 is configured to simulate the evaporator 1 of the gravity-driven two-phase fluid loop; the connection pipeline 11 is configured to simulate the steam pipeline 2, the condenser pipeline 3, and the liquid pipeline 6 of the gravity-driven two-phase fluid loop; the liquid storage component 10 is configured to simulate the liquid storage device 4 of the gravity-driven two-phase fluid loop. The material of the test device is the same as that of the gravity-driven two-phase fluid loop, and is 022Cr 17Ni 12Mo2 stainless steel, and the working medium is ammonia.

The ammonia working medium in the high-temperature baking component 12 perform decomposition under the conditions of high temperature and application of nickel as a catalyst to generate non-condensable gases: nitrogen and hydrogen; with elapse of time, the concentration of the nitrogen and hydrogen in the high-temperature baking component 12 is increasing, and the concentration of gaseous ammonia gradually decreases; in an initial state, highly-pure ammonia exist in the liquid storage component 10 and the connection pipeline 11; driven by a concentration difference, nitrogen and hydrogen in the high-temperature baking component 12 diffuse into the liquid storage component 10 and the connection pipeline 11. The concentration of nitrogen and hydrogen in the high-temperature baking component 12 decreases, but the highly-pure ammonia in the liquid storage component 10 and the connection pipeline 11 diffuse into the high-temperature baking component 12, so that the concentration of gaseous ammonia in the high-temperature baking component 12 increases. Due to the diffusion effect, on the one hand, the amount of nitrogen and hydrogen in the high-temperature baking component 12 is reduced, and on the other hand, the amount of ammonia in the high-temperature baking component 12 is increased, so that the ammonia in the high-temperature baking component 12 continuously decomposes until the decomposition reaction in the entire system reaches chemical balance.

Because the decomposition process of ammonia of the gravity heat pipe is the same as the decomposition process of ammonia in the gravity-driven two-phase fluid loop, the gravity heat pipe may be used to simulate the decomposition process of ammonia in the gravity-driven two-phase fluid loop. The size of the gravity heat pipe is designed, so that the amount of the non-condensable gases generated by decomposition of the ammonia of the gravity heat pipe is not less than the amount of the non-condensable gases generated by decomposition of the ammonia in the gravity-driven two-phase fluid loop, so that the problem of compatibility between the ammonia and the material of the gravity-driven two-phase fluid loop can be evaluated.

First, factors affecting decomposition of ammonia of the gravity-driven two-phase fluid loop are analyzed and are as the following: the temperature, volume, and surface area of the evaporator 1; sizes of pipeline cross sections and lengths of the steam pipeline 2, the condenser pipeline 3, and the liquid pipeline 6; system pressure; and the volume for accommodating nitrogen and hydrogen (including the volume of the steam pipeline 2, the volume of the condenser pipeline 3, the volume of the liquid pipeline 6, and the gas volume of the liquid storage device 4).

The volume of the evaporator 1 determines the amount of substances of the ammonia in the evaporator 1; under a condition of constant pressure and temperature, a larger volume indicates a larger amount of substances of the ammonia. A larger surface area indicates a larger area of contact between ammonia and the catalyst: the nickel element; a larger chemical reaction rate of decomposition of the ammonia indicates shorter time needed for reaching reaction balance, and a larger amount of nitrogen and hydrogen generated before the reaction balance.

The temperature of the evaporator 1 determines a chemical balance constant of decomposition of ammonia, and a higher temperature indicates a larger chemical balance constant of decomposition of ammonia.

The system pressure is also pressure in the evaporator 1, and under a condition of constant temperature and volume, the system pressure determines the amount of ammonia in the evaporator 1, that is, the amount of ammonia that participates in decomposition reaction. A larger pressure indicates a larger amount of ammonia in the evaporator 1, and a larger amount of nitrogen and hydrogen generated by decomposition; however, a larger pressure indicates a smaller amount of nitrogen and hydrogen generated by a same amount of ammonia.

The sizes of cross sections of the steam pipeline 2, the condenser pipeline 3, and the liquid pipeline 6 determine flowing areas of nitrogen and hydrogen in a process of diffusing from the evaporator 1 into the steam pipeline 2, the condenser pipeline 3, and the liquid pipeline 6, and larger cross sections indicate stronger diffusion capabilities. In addition, larger lengths of the steam pipeline 2 and the condenser pipeline 3 indicate larger resistance against diffusion of the nitrogen and hydrogen from the evaporator 1 into the liquid storage device 4, and are disadvantageous for diffusion.

A larger volume for accommodating nitrogen and hydrogen indicates a smaller concentration of nitrogen and hydrogen when a same amount of nitrogen and hydrogen is diffused from the evaporator 1, a larger concentration difference between nitrogen and hydrogen in the gas spaces of the evaporator 1 and the steam pipeline 2, the condenser pipeline 3, the liquid storage device 4 and the liquid pipeline 6, and a larger diffusion amount.

When an equivalent simulation member is designed, the following factors need to be considered:
1) being advantageous to decomposition of ammonia, and the amount of ammonia that take part in decomposition is not less than the amount of ammonia that participate in decomposition in the gravity-driven two-phase fluid loop; and
2) the diffusion volume of the nitrogen and hydrogen generated by decomposition is not less than the diffusion volume of the nitrogen and hydrogen in the gravity-driven two-phase fluid loop.

According to the foregoing analysis, the size of the test device is designed.

The pipeline volume of the high-temperature baking component 12 is not less than the pipeline volume of the evaporator 1 of the gravity-driven two-phase fluid loop, so that the amount of ammonia that participate in decomposition in the test device is not less than the amount of ammonia that participate in decomposition in the evaporator; the pipeline inner surface area of the high-temperature baking component 12 should not be less than the pipeline inner surface area of the evaporator 1, so that the rate of decomposition of ammonia in the test device is not less than the rate of decomposition of ammonia in the evaporator. The dimension of a screen mesh filled in the high-temperature baking component 12 is the same as the screen mesh in the evaporator 1. The temperature of the high-temperature baking component 12 is controlled by using a high-temperature baking oven in a test process, to ensure that the temperature thereof satisfies 250°C to 260°C.

A pipeline cross section of the connection pipeline 11 is not less than a maximum value of pipeline cross sections of the steam pipeline 2, the condenser pipeline 3, and the liquid pipeline 6 of the gravity-driven two-phase fluid loop; a length of the connection pipeline 11 is not greater than a sum of lengths of the steam pipeline 2 and the condenser pipeline 3 of the gravity-driven two-phase fluid loop, thereby facilitating gas diffusion.

A sum of a gas space volume of the liquid storage component 10 and a volume of the connection pipeline 11 is not less than a sum of capacities of the steam pipeline 2, the condenser pipeline 3, and the liquid pipeline 6 of the gravity-driven two-phase fluid loop and a gas space volume of the liquid storage device 4. The temperature of the liquid storage component 10 is ensured to be the same as the on-orbit temperature of the liquid storage device 4 of the gravity-driven two-phase fluid loop by means of heating or refrigeration measures, so that the system pressure of the test device is the same as the system pressure of the gravity-driven two-phase fluid loop.

Because a filling amount of the ammonia working medium affects the volume of the gas space in the liquid storage component 10, the filling amount of the ammonia working medium should ensure that the sum of the gas space volume of the liquid storage component 10 and the volume of the connection pipeline 11 is not less than the sum of the capacities of the steam pipeline 2, the condenser pipeline 3, and the liquid pipeline 6 of the gravity-driven two-phase fluid loop and the gas space volume of the liquid storage device 4; meanwhile, the filling amount of the ammonia working medium should also ensure normal work of the gravity heat pipe, to facilitate measurement of the non-condensable gases.

According to the foregoing equivalent principle, Table 1 provides structural sizes of components of the gravity-driven two-phase fluid loop and Table 2 provides structural sizes of the components of the test device. In Table 3, analytical comparison is performed between the sum of the gas space of the liquid storage component 10 and the volume of the connection pipeline 11 of the test device and the sum of the volume of the steam pipeline 2, the volume of the condenser pipeline 3, the volume of the liquid pipeline 6, and the gas space of the liquid storage device 4 of the gravity-driven two-phase fluid loop under different temperatures; it can be seen that under different temperatures of the liquid storage device, the former is greater than the latter, and it indicates this test device has a suitable size. The working medium ammonia of the gravity-driven two-phase fluid loop is 106 g, and the total ammonia in the test device is 33 g.

**Table 1 Structural sizes of the gravity-driven two-phase fluid loop**

| Component | Dimension | Volume (cm³) | Inner surface area (cm²) | Note |
|---|---|---|---|---|
| Steam pipeline 2 | ϕ6 mm×0.8 mm×1380 mm (length) | 21.0 | / | / |
| Condenser pipeline 3 | ϕ6 mm×0.8 mm×2172 mm (length) | 33.0 | / | / |
| Liquid storage device 4 | ϕ68 mm×4 mm | 200 | / | / |
| Liquid pipeline 6 | ϕ6 mm×0.8 mm×1360 mm (length) | 20.7 | / | / |
| Screen mesh evaporator 7 | ϕ10 mm×1 mm×86 mm (length) | 4.3 | 21.6 | 4 |
| Screen mesh (including 7 types) | 7.8 mm×2 mm×80 mm (length) | / | / | 4 |
| Liquid distributor 8 | ϕ6 mm×0.8 mm×367 mm (length) | 5.6 | 50.7 | / |
| Steam convergence device 9 | ϕ6 mm×0.8 mm×275 mm (length) | 4.2 | 38 | / |

**Table 2 Structural sizes of the test device**

| Component | Dimension | Volume (cm³) | Inner surface area (cm²) | Note |
|---|---|---|---|---|
| Liquid storage component 10 | ϕ68 mm×4 mm | 220 | / | / |
| Connection pipeline 11 | ϕ6 mm×0.8 mm× 1000 mm (length) | 15.2 | / | Smaller than a sum of lengths of the steam pipeline 2 and the condenser pipeline 3 of the gravity-driven two-phase fluid loop. |
| High-temperature baking component 12 | ϕ10 mm×1 mm× 1000 mm (length) | 60.3 | 251.2 | The volume and the inner Volume and inner surface area are both greater than a sum of capacities and inner surface areas of the screen mesh evaporator 7, the liquid distributor 8, and the steam convergence device 9 of the gravity-driven two-phase fluid loop |
| Screen mesh (including 3 types) | 7.8 mm×2 mm×90 mm (length) | / | / | 4, the dimension is the same as that of the screen mesh of the evaporator of the gravity-driven two-phase fluid loop. |

**Table 3 Comparison between gas space capacities for accommodating nitrogen and hydrogen in the gravity-driven two-phase fluid loop and the test device**

| Two-phas e temperatu re (°C) of the test system | Gas space A (cm³) of the liquid storage device 4 of the gravity-driven two-phase fluid loop | A sum B (cm³) of capacities of the steam pipeline 2, the condenser pipeline 3, and the liquid pipeline 6 of the gravity-driven two-phase fluid loop | Gas space C (cm³) of the liquid storage component 10 of the test device | Volume D (cm³) of the connection pipeline 11 of the test device | C+D-A-B (cm³) |
|---|---|---|---|---|---|
| 70 | 63.6 | 74.7 | 161.4 | 15.2 | 38.3 |
| 65 | 65.8 | 74.7 | 160.8 | 15.2 | 35.5 |
| 55 | 71.9 | 74.7 | 161.7 | 15.2 | 30.3 |
| 50 | 74.2 | 74.7 | 161.8 | 15.2 | 28.1 |
| 45 | 76.7 | 74.7 | 162 | 15.2 | 25.8 |
| 40 | 78.9 | 74.7 | 162.2 | 15.2 | 23.8 |
| 35 | 78.9 | 74.7 | 160.2 | 15.2 | 21.8 |
| 30 | 83.1 | 74.7 | 162.8 | 15.2 | 20.2 |
| 20 | 87 | 74.7 | 163.5 | 15.2 | 17 |
| 15 | 104.2 | 74.7 | 168.5 | 15.2 | 4.8 |
| 10 | 90.8 | 74.7 | 164.2 | 15.2 | 13.9 |
| 5 | 92.4 | 74.7 | 164.6 | 15.2 | 12.7 |
| 0 | 94.1 | 74.7 | 165 | 15.2 | 11.4 |

After the test device is used to perform equivalent simulation on the gravity-driven two-phase fluid loop, first, a temperature control operation is performed on the test device; a working process of the gravity-driven two-phase fluid loop is simulated to obtain the amount of non-condensable gases generated by high-temperature decomposition of the ammonia working medium under the condition of application of nickel as a catalyst in the evaporator. Then, according to the amount of non-condensable gases obtained by the test device, highly-pure nitrogen with a same substance amount is filled into the gravity-driven two-phase fluid loop, and a heat transfer property test is performed on the gravity-driven two-phase fluid loop, to determine whether the ammonia working medium is compatible with the material of the gravity-driven two-phase fluid loop in a moon day.

The method for testing compatibility is as follows:
Step 1, a section, connected to the liquid storage component 10, of the connection pipeline 11 in the test device is bent to make a height of the liquid storage component 10 lower than that of the high-temperature baking component 12, thereby preventing the liquid in the liquid storage component 11 from flowing into the high-temperature baking component 12 under the effect of gravity, and therefore simulation of the real decomposition process of ammonia of the gravity-driven two-phase fluid loop in a moon day of the test device is prevented from being destroyed.
Step 2, the section of the high-temperature baking component 12 of the test device is placed in a high-temperature baking oven for heating and temperature control, to make a temperature thereof maintained in a range of from 250°C to 260°C, so that the temperature of the evaporator 1 of the gravity-driven two-phase fluid loop in the moon day is simulated.
Step 3, a heating piece is stuck on the connection pipeline 11 of the test device to perform heating and temperature control on the connection pipeline 11, so that the temperature thereof is higher than the maximum temperature of temperatures of the steam pipeline 2, the condenser pipeline 3, and the liquid pipeline 6 in the gravity-driven two-phase fluid loop, but the maximum temperature of the connection pipeline 11 cannot be 10°C (project margin) higher than the maximum temperature, so that the diffusion capability of the non-condensable gases in the test device is not less than that of the gravity-driven two-phase fluid loop.
Sep 4, a heating piece is stuck on the liquid storage component 10 of the test device to perform heating and temperature control on the liquid storage component 10, so that the temperature thereof experiences a change process the same as that of the liquid storage device 4 during a moon day of the gravity-driven two-phase fluid loop.
Step 5, because one moon day is 14 earth days, and the temperature control on the components is maintained for 14 earth days.
Step 6, after high-temperature baking ends, the test device tests an amount of non-condensable gases according to a method (the prior art) for testing non-condensable gases by the gravity heat pipe, to obtain the amount of non-condensable gases generated by decomposition of the ammonia in a first moon day.
Step 7, because the solubility of nitrogen and hydrogen in the liquid ammonia can be ignored, the partial pressure of nitrogen in the liquid storage device 4 is the same as the partial pressure of a same amount of mixed gases of nitrogen and hydrogen in the liquid storage device 4, and therefore nitrogen can be used to replace the mixed gases of nitrogen and hydrogen. Highly-pure nitrogen (the purity of the nitrogen is not less than 99.999%) with a same substance amount is filled into the gravity-driven two-phase fluid loop according to the amount of the non-condensable gases obtained in step 6. a heat transfer property test is performed on the gravity-driven two-phase fluid loop; temperatures of the evaporator 1 before and after the non-condensable gases are filled are observed, and a temperature increment of the evaporator 1 after the non-condensable gases are filled is compared with an allowed temperature increment of the evaporator 1, and it is determined whether the ammonia working medium is compatible with the material of the gravity-driven two-phase fluid loop during the moon day; if the temperature increment of the evaporator 1 after the non-condensable gases are filled is less than the allowed temperature increment of the evaporator 1, the ammonia working medium is compatible with the material of the gravity-driven two-phase fluid loop; and otherwise, the ammonia working medium is incompatible with the material of the gravity-driven two-phase fluid loop.

## Claims

1. A test device for compatibility of a gravity-driven two-phase fluid loop, the gravity-driven two-phase fluid loop comprising an evaporator (1), a steam pipeline (2), a condensation pipeline (3), a liquid storage device (4) and a liquid pipeline (6) which are connected in sequence, wherein the condensation pipeline (3) is located above a gravity field of the liquid storage device (4); the evaporator (1) comprises a screen mesh evaporator (7), a liquid distributor (8) and a steam convergence device (9), and the evaporator (1) is located below the gravity field of the liquid storage device (4) and is coupled to an isotopic heat source; a gravity auxiliary height difference is formed between an inner liquid level of the liquid storage device (4) and a bottom part of the evaporator (1); and a control valve (5) is disposed on the liquid pipeline (6); wherein the material of the test device is the same as that of the gravity-driven two-phase fluid loop, and is 022Cr 17Ni 12Mo2 stainless steel, and the working medium is ammonia; wherein the test device is a sealed and hollow gravity heat pipe that is integrally formed; the test device is divided into three sections: a liquid storage component (10), a connection pipeline (11), and a high-temperature baking component (12); wherein one end of the connection pipeline (11) is connected to the liquid storage component (10), and the other end is connected to the high-temperature baking component (12); the test device is prepared from the same material as that of the gravity-driven two-phase fluid loop, and the test device is filled with the same working medium as that of the gravity-driven two-phase fluid loop, wherein
a pipeline volume of the high-temperature baking component (12) is not less than that of an evaporator of the gravity-driven two-phase fluid loop; an inner surface area of the pipeline of the high-temperature baking component (12) is not less than that of the evaporator; a dimension of a screen mesh filled in the high-temperature baking component (12) is the same as that of a screen mesh in the evaporator;
a cross section of the connection pipeline (11) is not less than a maximum value of cross sections of a steam pipeline, a condenser pipeline, and a liquid pipeline of the gravity-driven two-phase fluid loop; a length of the connection pipeline (11) is not greater than a sum of lengths of the steam pipeline and the condenser pipeline of the gravity-driven two-phase fluid loop;
a sum of a gas space volume of the liquid storage component (10) and a volume of the connection pipeline (11) is not less than a sum of capacities of the steam pipeline, the condenser pipeline, and the liquid pipeline of the gravity-driven two-phase fluid loop and a gas space volume of a liquid storage device.

2. The test device for compatibility of a gravity-driven two-phase fluid loop according to claim 1, wherein a filling amount of an ammonia working medium in the test device ensures that the sum of the gas space volume of the liquid storage component (10) and the volume of the connection pipeline (11) is not less than the sum of the capacities of the steam pipeline, the condenser pipeline, and the liquid pipeline of the gravity-driven two-phase fluid loop and the gas space volume of the liquid storage device; meanwhile, the filling amount of the ammonia working medium ensures normal work of the gravity heat pipe.

3. The test device for compatibility of a gravity-driven two-phase fluid loop according to claim 1, wherein during a high-temperature baking process, if the test device is horizontally placed, a section, connected to the liquid storage component (10), of the connection pipeline (11) in the test device is bent to ensure that a height of the liquid storage component (10) is lower than that of the high-temperature baking component (12).

4. A test method for compatibility of a gravity-driven two-phase fluid loop by using the test device according to claim 1 or 2, wherein the gravity-driven two-phase fluid loop comprising an evaporator (I), a steam pipeline (2), a condensation pipeline (3), a liquid storage device (4) and a liquid pipeline (6) which are connected in sequence, wherein the condensation pipeline (3) is located above a gravity field of the liquid storage device (4); the evaporator (1) comprises a screen mesh evaporator (7), a liquid distributor (8) and a steam convergence device (9), and the evaporator (1) is located below the gravity field of the liquid storage device (4) and is coupled to an isotopic heat source; a gravity auxiliary height difference is formed between an inner liquid level of the liquid storage device (4) and a bottom part of the evaporator (1); and a control valve (5) is disposed on the liquid pipeline (6); wherein the material of the test device is the same as that of the gravity-driven two-phase fluid loop, and is 022Cr 17Ni 12Mo2 stainless steel, and the working medium is ammonia; wherein
the test device is a sealed and hollow gravity heat pipe that is integrally formed; the test device is divided into three sections: a liquid storage component (10), a connection pipeline (11), and a high-temperature baking component (12); wherein one end of the connection pipeline (11) is connected to the liquid storage component (10), and the other end is connected to the high-temperature baking component (12); the test device is prepared from the same material as that of the gravity-driven two-phase fluid loop, and the test device is filled with the same working medium as that of the gravity-driven two-phase fluid loop, wherein
a pipeline volume of the high-temperature baking component (12) is not less than that of an evaporator of the gravity-driven two-phase fluid loop; an inner surface area of the pipeline of the high-temperature baking component (12) is not less than that of the evaporator; a dimension of a screen mesh filled in the high-temperature baking component (12) is the same as that of a screen mesh in the evaporator;
a cross section of the connection pipeline (11) is not less than a maximum value of cross sections of a steam pipeline, a condenser pipeline, and a liquid pipeline of the gravity-driven two-phase fluid loop; a length of the connection pipeline (11) is not greater than a sum of lengths of the steam pipeline and the condenser pipeline of the gravity-driven two-phase fluid loop;
a sum of a gas space volume of the liquid storage component (10) and a volume of the connection pipeline (11) is not less than a sum of capacities of the steam pipeline, the condenser pipeline, and the liquid pipeline of the gravity-driven two-phase fluid loop and a gas space volume of a liquid storage device;
wherein the test method comprising the following steps:
step 1, bending a section, connected to the liquid storage component (10), of the connection pipeline (11) in the test device, so that a height of the liquid storage component (10) is lower than that of the high-temperature baking component (12);
step 2, placing the section of the high-temperature baking component (12) of the test device in a high-temperature baking oven, to make a temperature thereof maintained in a range of from 250°C to 260°C;
step 3, heating and controlling a temperature of the connection pipeline (11) of the test device, to make the temperature thereof higher than a maximum temperature of temperatures of the steam pipeline (2), the condenser pipeline (3), and the liquid pipeline (6) in the gravity-driven two-phase fluid loop;
step 4, controlling a temperature of the liquid storage component (10) of the test device, to make the temperature thereof experience the same change as that of the liquid storage device (4) during a moon day of the gravity-driven two-phase fluid loop;
step 5, maintaining temperature control of the liquid storage component (10), the connection pipeline (11), and the high-temperature baking component (12) for 14 earth days;
step 6, performing, by the test device, a test of an amount of non-condensable gases according to a method for testing non-condensable gases by the gravity heat pipe, to obtain the amount of non-condensable gases generated by decomposition of the ammonia working medium in the moon day;
step 7, filling highly-pure nitrogen with a same substance amount into the gravity-driven two-phase fluid loop according to the amount of the non-condensable gases obtained in step 6; and performing a heat transfer property test on the gravity-driven two-phase fluid loop, comparing a temperature increment of the evaporator (1) after the non-condensable gases are filled with an allowed temperature increment of the evaporator (1), and determining whether the ammonia working medium is compatible with the material of the gravity-driven two-phase fluid loop during the moon day; if the temperature increment of the evaporator (1) after the non-condensable gases are filled is less than the allowed temperature increment of the evaporator (1), the ammonia working medium is compatible with the material of the gravity-driven two-phase fluid loop; and otherwise, the ammonia working medium is incompatible with the material of the gravity-driven two-phase fluid loop.

## Patentansprüche

1. Testvorrichtung für eine Kompatibilität eines durch Schwerkraft angetriebenen Zweiphasen-Fluidkreislaufs, wobei der durch Schwerkraft angetriebene Zweiphasen-Fluidkreislauf einen Verdampfer (1), eine Dampfleitung (2), eine Kondensationsleitung (3), eine Flüssigkeitsspeichervorrichtung (4) und eine Flüssigkeitsleitung (6) umfasst, die in der Reihe verbunden sind, wobei die Kondensationsleitung (3) oberhalb eines Schwerkraftfelds der Flüssigkeitsspeichervorrichtung (4) angeordnet ist; der Verdampfer (1) einen Siebgewebeverdampfer (7), einen Flüssigkeitsverteiler (8) und eine Dampfkonvergenzvorrichtung (9) umfasst, und der Verdampfer (1) unterhalb des Schwerkraftfeldes der Flüssigkeitsspeichervorrichtung (4) angeordnet und mit einer Isotopenwärmequelle gekoppelt ist; ein Schwerkraft-Hilfshöhenunterschied zwischen einem inneren Flüssigkeitspegel der Flüssigkeitsspeichervorrichtung (4) und einem Bodenteil des Verdampfers (1) gebildet wird; und ein Steuerventil (5) an der Flüssigkeitsleitung (6) angeordnet ist; wobei das Material der Testvorrichtung das gleiche wie das des durch Schwerkraft angetriebenen Zweiphasen-Fluidkreislaufs und 022Cr 17Ni 12Mo2 Edelstahl ist und das Arbeitsmedium Ammoniak ist; wobei
die Testvorrichtung eine abgedichtete und hohle Schwerkraft-Wärmeleitung ist, die einstückig ausgebildet ist; die Testvorrichtung in drei Abschnitte unterteilt ist: eine Flüssigkeitsspeicherkomponente (10), eine Verbindungsleitung (11) und eine Hochtemperatur-Backkomponente (12); wobei ein Ende der Verbindungsleitung (11) mit der Flüssigkeitsspeicherkomponente (10) und das andere Ende mit der Hochtemperatur-Backkomponente (12) verbunden ist; die Testvorrichtung aus dem gleichen Material wie das des durch Schwerkraft angetriebenen Zweiphasen-Fluidkreislaufs hergestellt ist und die Testvorrichtung mit dem gleichen Arbeitsmedium wie das des durch Schwerkraft angetriebenen Zweiphasen-Fluidkreislaufs gefüllt ist, wobei
ein Leitungsvolumen der Hochtemperatur-Backkomponente (12) nicht kleiner ist als das eines Verdampfers des durch Schwerkraft angetriebenen Zweiphasen-Fluidkreislaufs; eine innere Oberfläche der Leitung der Hochtemperatur-Backkomponente (12) nicht kleiner ist als die des Verdampfers; eine Abmessung eines in die Hochtemperatur-Backkomponente (12) gefüllten Siebgewebes die gleiche ist wie die eines Siebgewebes in dem Verdampfer; ein Querschnitt der Verbindungsleitung (11) nicht kleiner ist als ein Maximalwert der Querschnitte einer Dampfleitung, einer Kondensatorleitung und einer Flüssigkeitsleitung des durch Schwerkraft angetriebenen Zweiphasen-Fluidkreislaufs; eine Länge der Verbindungsleitung (11) nicht größer ist als eine Summe der Längen der Dampfleitung und der Kondensatorleitung des durch Schwerkraft angetriebenen Zweiphasen-Fluidkreislaufs; eine Summe eines Gasraumvolumens der Flüssigkeitsspeicherkomponente (10) und eines Volumens der Verbindungsleitung (11) nicht kleiner ist als eine Summe der Kapazitäten der Dampfleitung, der Kondensatorleitung und der Flüssigkeitsleitung des durch Schwerkraft angetriebenen Zweiphasen-Fluidkreislaufs und eines Gasraumvolumens einer Flüssigkeitsspeichervorrichtung.

2. Testvorrichtung für eine Kompatibilität eines durch Schwerkraft angetriebenen Zweiphasen-Fluidkreislaufs nach Anspruch 1, wobei eine Füllmenge eines Ammoniak-Arbeitsmediums in der Testvorrichtung sicherstellt, dass die Summe des Gasraumvolumens der Flüssigkeitsspeicherkomponente (10) und des Volumens der Verbindungsleitung (11) nicht kleiner ist als die Summe der Kapazitäten der Dampfleitung, der Kondensatorleitung und der Flüssigkeitsleitung des Schwerkraft-Zweiphasen-Fluidkreislaufs und des Gasraumvolumens der Flüssigkeitsspeichervorrichtung; wobei derweil die Füllmenge des Ammoniak-Arbeitsmediums die normale Arbeit der Schwerkraft-Wärmeleitung gewährleistet.

3. Testvorrichtung für eine Kompatibilität eines durch Schwerkraft angetriebenen Zweiphasen-Fluidkreislaufs nach Anspruch 1, wobei während eines Hochtemperatur-Backvorgangs, wenn die Testvorrichtung horizontal angeordnet ist, ein mit der Flüssigkeitsspeicherkomponente (10) verbundener Abschnitt der Verbindungsleitung (11) in der Testvorrichtung gebogen wird, um sicherzustellen, dass eine Höhe der Flüssigkeitsspeicherkomponente (10) niedriger ist als die der Hochtemperatur-Backkomponente (12).

4. Testverfahren für eine Kompatibilität eines durch Schwerkraft angetriebenen Zweiphasen-Fluidkreislaufs unter Verwendung der Testvorrichtung nach Anspruch 1 oder 2, wobei der durch Schwerkraft angetriebene Zweiphasen-Fluidkreislauf einen Verdampfer (1), eine Dampfleitung (2), eine Kondensationsleitung (3), eine Flüssigkeitsspeichervorrichtung (4) und eine Flüssigkeitsleitung (6) umfasst, die in der Reihe verbunden sind, wobei die Kondensationsleitung (3) oberhalb eines Schwerkraftfelds der Flüssigkeitsspeichervorrichtung (4) angeordnet ist; der Verdampfer (1) einen Siebgewebeverdampfer (7), einen Flüssigkeitsverteiler (8) und eine Dampfkonvergenzeinrichtung (9) aufweist und der Verdampfer (1) unterhalb des Schwerkraftfeldes der Flüssigkeitsspeichervorrichtung (4) angeordnet und mit einer Isotopenwärmequelle gekoppelt ist; ein Schwerkraft-Hilfshöhenunterschied zwischen einem inneren Flüssigkeitspegel der Flüssigkeitsspeichervorrichtung (4) und einem Bodenteil des Verdampfers (1) gebildet wird; und ein Steuerventil (5) an der Flüssigkeitsleitung (6) angeordnet ist; wobei das Material der Testvorrichtung das gleiche wie das des durch Schwerkraft angetriebenen Zweiphasen-Fluidkreislaufs und 022Cr 17Ni 12Mo2 Edelstahl ist und das Arbeitsmedium Ammoniak ist; wobei
die Testvorrichtung eine abgedichtete und hohle Schwerkraft-Wärmeleitung ist, die einstückig ausgebildet ist; die Testvorrichtung in drei Abschnitte unterteilt ist: eine Flüssigkeitsspeicherkomponente (10), eine Verbindungsleitung (11) und eine Hochtemperatur-Backkomponente (12); wobei ein Ende der Verbindungsleitung (11) mit der Flüssigkeitsspeicherkomponente (10) und das andere Ende mit der Hochtemperatur-Backkomponente (12) verbunden ist; die Testvorrichtung aus dem gleichen Material wie das des durch Schwerkraft angetriebenen Zweiphasen-Fluidkreislaufs hergestellt ist und die Testvorrichtung mit dem gleichen Arbeitsmedium wie das des durch Schwerkraft angetriebenen Zweiphasen-Fluidkreislaufs gefüllt ist, wobei
ein Leitungsvolumen der Hochtemperatur-Backkomponente (12) nicht kleiner ist als das eines Verdampfers des durch Schwerkraft angetriebenen Zweiphasen-Fluidkreislaufs; eine innere Oberfläche der Leitung der Hochtemperatur-Backkomponente (12) nicht kleiner ist als die des Verdampfers; eine Abmessung eines in die Hochtemperatur-Backkomponente (12) gefüllten Siebgewebes die gleiche ist wie die eines Siebgewebes in dem Verdampfer; ein Querschnitt der Verbindungsleitung (11) nicht kleiner ist als ein Maximalwert der Querschnitte einer Dampfleitung, einer Kondensatorleitung und einer Flüssigkeitsleitung des durch Schwerkraft angetriebenen Zweiphasen-Fluidkreislaufs; eine Länge der Verbindungsleitung (11) nicht größer ist als eine Summe der Längen der Dampfleitung und der Kondensatorleitung des durch Schwerkraft angetriebenen Zweiphasen-Fluidkreislaufs; eine Summe eines Gasraumvolumens der Flüssigkeitsspeicherkomponente (10) und eines Volumens der Verbindungsleitung (11) nicht kleiner ist als eine Summe der Kapazitäten der Dampfleitung, der Kondensatorleitung und der Flüssigkeitsleitung des durch Schwerkraft angetriebenen Zweiphasen-Fluidkreislaufs und eines Gasraumvolumens einer Flüssigkeitsspeichervorrichtung;
wobei das Testverfahren die folgenden Schritte umfasst:
Schritt 1, Biegen eines mit dem Flüssigkeitsspeicher (10) verbundenen Abschnitts der Verbindungsleitung (11) in der Testvorrichtung, so dass eine Höhe des Flüssigkeitsspeichers (10) niedriger ist als die der Hochtemperatur-Backkomponente (12);
Schritt 2, Platzieren des Abschnitts der Hochtemperatur-Backkomponente (12) der Testvorrichtung in einem Hochtemperatur-Backofen, um eine Temperatur davon in einem Bereich von 250°C bis 260°C zu halten;
Schritt 3, Erhitzen und Steuern einer Temperatur der Verbindungsleitung (11) der Testvorrichtung, um deren Temperatur höher als eine maximale Temperatur der Temperaturen der Dampfleitung (2), der Kondensatorleitung (3) und der Flüssigkeitsleitung (6) in dem durch Schwerkraft angetriebenen Zweiphasen-Fluidkreislauf zu machen;
Schritt 4, Steuern einer Temperatur der Flüssigkeitsspeicherkomponente (10) der Testvorrichtung, so dass deren Temperatur die gleiche Änderung erfährt wie die der Flüssigkeitsspeichervorrichtung (4) während eines Mondtages des durch Schwerkraft angetriebenen Zweiphasen-Fluidkreislaufs;
Schritt 5, Aufrechterhaltung der Temperaturkontrolle der Flüssigkeitsspeicherkomponente (10), der Verbindungsleitung (11) und der Hochtemperatur-Backkomponente (12) für 14 Erdtage;
Schritt 6, Durchführen eines Tests einer Menge nicht kondensierbarer Gase durch die Testvorrichtung gemäß einem Verfahren zum Testen nicht kondensierbarer Gase durch die Schwerkraft-Wärmeleitung, um die Menge nicht kondensierbarer Gase zu erhalten, die durch die Zersetzung des Ammoniak-Arbeitsmediums am Mondtag erzeugt wird;
Schritt 7, Einfüllen von hochreinem Stickstoff mit einer gleichen Substanzmenge in den durch Schwerkraft angetriebenen Zweiphasen-Fluidkreislauf entsprechend der in Schritt 6 erhaltenen Menge der nicht kondensierbaren Gase; und Durchführen eines Tests der Wärmeübertragungseigenschaften des durch Schwerkraft angetriebenen Zweiphasen-Fluidkreislaufs, Vergleichen eines Temperaturanstiegs des Verdampfers (1) nach dem Einfüllen der nicht kondensierbaren Gase mit einem zulässigen Temperaturanstieg des Verdampfers (1) und Bestimmen, ob das Ammoniak-Arbeitsmedium mit dem Material des durch Schwerkraft angetriebenen Zweiphasen-Fluidkreislaufs während des Mondtages kompatibel ist; wenn der Temperaturanstieg des Verdampfers (1), nachdem die nicht kondensierbaren Gase eingefüllt sind, kleiner ist als der zulässige Temperaturanstieg des Verdampfers (1), ist das Ammoniak-Arbeitsmedium mit dem Material des durch Schwerkraft angetriebenen Zweiphasen-Fluidkreislaufs kompatibel; und andernfalls ist das Ammoniak-Arbeitsmedium mit dem Material des durch Schwerkraft angetriebenen Zweiphasen-Fluidkreislaufs inkompatibel.

## Revendications

1. Dispositif de test pour la compatibilité d'une boucle de fluide à deux phases mue par la gravité, la boucle de fluide à deux phases mue par la gravité comprenant un évaporateur (1), une conduite de vapeur (2), une conduite de condensation (3), un dispositif de stockage de liquide (4) et une conduite de liquide (6) qui sont raccordés les uns à la suite des autres, dans lequel la conduite de condensation (3) est située au-dessus d'un champ de gravité du dispositif de stockage de liquide (4) ; l'évaporateur (1) comprend un évaporateur à toile de criblage (7), un distributeur de liquide (8) et un dispositif de convergence de vapeur (9), et l'évaporateur (1) est situé en dessous du champ de gravité du dispositif de stockage de liquide (4) et est accouplé à une source de chaleur isotopique ; une différence de hauteur auxiliaire de gravité est formée entre un niveau de liquide intérieur du dispositif de stockage de liquide (4) et une partie inférieure de l'évaporateur (1) ; et une vanne de régulation (5) est disposée sur la conduite de liquide (6) ; dans lequel le matériau du dispositif de test est le même que celui de la boucle de fluide à deux phases mue par la gravité, et est de l'acier inoxydable 022 Cr 17 Ni 12 Mo2, et le fluide de travail est de l'ammoniaque ; dans lequel
le dispositif de test est un caloduc à écoulement libre fermé hermétiquement et creux qui est formé d'un seul tenant ; le dispositif de test est divisé en trois sections : un élément de stockage de liquide (10), une conduite de raccordement (11) et un élément de cuisson à haute température (12) ; dans lequel une extrémité de la conduite de raccordement (11) est raccordée à l'élément de stockage de liquide (10), et l'autre extrémité est raccordée à l'élément de cuisson à haute température (12) ; le dispositif de test est préparé à partir du même matériau que celui de la boucle de fluide à deux phases mue par la gravité, et le dispositif de test est rempli du même fluide de travail que celui de la boucle de fluide à deux phases mue par la gravité, dans lequel
un volume de conduite de l'élément de cuisson à haute température (12) n'est pas inférieur à celui d'un évaporateur de la boucle de fluide à deux phases mue par la gravité ; une superficie intérieure de la conduite de l'élément de cuisson à haute température (12) n'est pas inférieure à celle de l'évaporateur ; une dimension d'une toile de criblage qui remplit l'élément de cuisson à haute température (12) est la même que celle d'une toile de criblage dans l'évaporateur ;
une coupe transversale de la conduite de raccordement (11) n'est pas inférieure à une valeur maximale de coupes transversales d'une conduite de vapeur, une conduite de condensateur et une conduite de liquide de la boucle de fluide à deux phases mue par la gravité ; une longueur de la conduite de raccordement (11) n'est pas supérieure à une somme de longueurs de la conduite de vapeur et la conduite de condensateur de la boucle de fluide à deux phases mue par la gravité ;
une somme d'un volume d'espace de gaz de l'élément de stockage de liquide (10) et d'un volume de la conduite de raccordement (11) n'est pas inférieure à une somme de capacités de la conduite de vapeur, la conduite de condensateur et la conduite de liquide de la boucle de fluide à deux phases mue par la gravité et d'un volume d'espace de gaz d'un dispositif de stockage de liquide.

2. Dispositif de test pour la compatibilité d'une boucle de fluide à deux phases mue par la gravité selon la revendication 1, dans lequel une quantité de remplissage d'un fluide de travail ammoniaqué dans le dispositif de test garantit que la somme du volume d'espace de gaz de l'élément de stockage de liquide (10) et du volume de la conduite de raccordement (11) n'est pas inférieure à la somme des capacités de la conduite de vapeur, la conduite de condensateur et la conduite de liquide de la boucle de fluide à deux phases mue par la gravité et du volume d'espace de gaz du dispositif de stockage de liquide; pendant ce temps, la quantité de remplissage du fluide de travail ammoniaqué garantit un fonctionnement normal du caloduc à écoulement libre.

3. Dispositif de test pour la compatibilité d'une boucle de fluide à deux phases mue par la gravité selon la revendication 1, dans lequel durant un procédé de cuisson à haute température, si le dispositif de test est placé horizontalement, une section, raccordée à l'élément de stockage de liquide (10), de la conduite de raccordement (11) dans le dispositif de test est courbée pour garantir qu'une hauteur de l'élément de stockage de liquide (10) est inférieure à celle de l'élément de cuisson à haute température (12).

4. Procédé de test pour la compatibilité d'une boucle de fluide à deux phases mue par la gravité en utilisant le dispositif de test selon la revendication 1 ou 2, dans lequel la boucle de fluide à deux phases mue par la gravité comprenant un évaporateur (1), une conduite de vapeur (2), une conduite de condensation (3), un dispositif de stockage de liquide (4) et une conduite de liquide (6) qui sont raccordés les uns à la suite des autres, dans lequel la conduite de condensation (3) est située au-dessus d'un champ de gravité du dispositif de stockage de liquide (4) ; l'évaporateur (1) comprend un évaporateur à toile de criblage (7), un distributeur de liquide (8) et un dispositif de convergence de vapeur (9), et l'évaporateur (1) est situé en dessous du champ de gravité du dispositif de stockage de liquide (4) et est accouplé à une source de chaleur isotopique ; une différence de hauteur auxiliaire de gravité est formée entre un niveau de liquide intérieur du dispositif de stockage de liquide (4) et une partie inférieure de l'évaporateur (1) ; et une vanne de régulation (5) est disposée sur la conduite de liquide (6) ; dans lequel le matériau du dispositif de test est le même que celui de la boucle de fluide à deux phases mue par la gravité, et est de l'acier inoxydable 022 Cr 17 Ni 12 Mo2, et le fluide de travail est de l'ammoniaque ; dans lequel
le dispositif de test est un caloduc à écoulement libre fermé hermétiquement et creux qui est formé d'un seul tenant ; le dispositif de test est divisé en trois sections : un élément de stockage de liquide (10), une conduite de raccordement (11) et un élément de cuisson à haute température (12) ; dans lequel une extrémité de la conduite de raccordement (11) est raccordée à l'élément de stockage de liquide (10), et l'autre extrémité est raccordée à l'élément de cuisson à haute température (12) ; le dispositif de test est préparé à partir du même matériau que celui de la boucle de fluide à deux phases mue par la gravité, et le dispositif de test est rempli du même fluide de travail que celui de la boucle de fluide à deux phases mue par la gravité, dans lequel
un volume de conduite de l'élément de cuisson à haute température (12) n'est pas inférieur à celui d'un évaporateur de la boucle de fluide à deux phases mue par la gravité ; une superficie intérieure de la conduite de l'élément de cuisson à haute température (12) n'est pas inférieure à celle de l'évaporateur ; une dimension d'une toile de criblage qui remplit l'élément de cuisson à haute température (12) est la même que celle d'une toile de criblage dans l'évaporateur ;
une coupe transversale de la conduite de raccordement (11) n'est pas inférieure à une valeur maximale de coupes transversales d'une conduite de vapeur, une conduite de condensateur et une conduite de liquide de la boucle de fluide à deux phases mue par la gravité ; une longueur de la conduite de raccordement (11) n'est pas supérieure à une somme de longueurs de la conduite de vapeur et la conduite de condensateur de la boucle de fluide à deux phases mue par la gravité ;
une somme d'un volume d'espace de gaz de l'élément de stockage de liquide (10) et d'un volume de la conduite de raccordement (11) n'est pas inférieure à une somme de capacités de la conduite de vapeur, la conduite de condensateur et la conduite de liquide de la boucle de fluide à deux phases mue par la gravité et d'un volume d'espace de gaz d'un dispositif de stockage de liquide ;
dans lequel le procédé de test comprenant les étapes suivantes :
étape 1, la courbure d'une section, raccordée à l'élément de stockage de liquide (10), de la conduite de raccordement (11) dans le dispositif de test, de sorte qu'une hauteur de l'élément de stockage de liquide (10) soit inférieure à celle de l'élément de cuisson à haute température (12) ;
étape 2, le placement de la section de l'élément de cuisson à haute température (12) du dispositif de test dans un four de cuisson à haute température, pour qu'une température de celui-ci soit maintenue dans une plage de 250 °C à 260 °C;
étape 3, le chauffage et la régulation d'une température de la conduite de raccordement (11) du dispositif de test, pour que la température de celle-ci soit supérieure à une température maximale de températures de la conduite de vapeur (2), la conduite de condensateur (3) et la conduite de liquide (6) dans la boucle de fluide à deux phases mue par la gravité ;
étape 4, la régulation d'une température de l'élément de stockage de liquide (10) du dispositif de test, pour que la température de celui-ci subisse le même changement que celle du dispositif de stockage de liquide (4) durant un jour lunaire de la boucle de fluide à deux phases mue par la gravité ;
étape 5, le maintien d'une régulation de température de l'élément de stockage de liquide (10), la conduite de raccordement (11) et l'élément de cuisson à haute température (12) pendant 14 jours terrestres ;
étape 6, la réalisation, par le dispositif de test, d'un test d'une quantité de gaz non condensables conformément à un procédé pour tester des gaz non condensables par le caloduc à écoulement libre, pour obtenir la quantité de gaz non condensables générés par une décomposition du fluide de travail ammoniaqué dans le jour lunaire ;
étape 7, le remplissage avec de l'azote extrêmement pur avec une même quantité de substance de la boucle de fluide à deux phases mue par la gravité conformément à la quantité des gaz non condensables obtenue à l'étape 6 ; et la réalisation d'un test de propriété de transfert de chaleur sur la boucle de fluide à deux phases mue par la gravité, la comparaison d'un incrément de température de l'évaporateur (1) après le remplissage avec les gaz non condensables avec un incrément de température admis de l'évaporateur (1), et le fait de déterminer si le fluide de travail ammoniaqué est compatible avec le matériau de la boucle de fluide à deux phases mue par la gravité durant le jour lunaire ; si l'incrément de température de l'évaporateur (1) après le remplissage avec les gaz non condensables est inférieur à l'incrément de température admis de l'évaporateur (1), le fluide de travail ammoniaqué est compatible avec le matériau de la boucle de fluide à deux phases mue par la gravité ; et sinon, le fluide de travail ammoniaqué est incompatible avec le matériau de la boucle de fluide à deux phases mue par la gravité.
